# FASCICULE DE BREVET EUROPEEN

(11) **EP 2 161 184 B1**
(45) Date de publication et mention de la délivrance du brevet: **27.04.2011**
(21) Numéro de dépôt: 09165971.4
(22) Date de dépôt: 21.07.2009
(51) Int. Cl.: B62D 65/06, B60J 1/18, E05F 11/38

(54) **Procédé de contrôle et de réglage du montage d'une vitre de porte pour véhicule coupé/cabriolet**
Kontroll- und Regulierverfahren der Montage eines Fensters in der Tür eines Coupé- oder Cabriolet-Fahrzeugs
Method for controlling and adjusting the installation of a door window in a coupé/cabriolet vehicle

(30) Priorité: 09.09.2008 FR 0856037
(43) Date de publication de la demande: 10.03.2010
(73) Titulaire: PEUGEOT CITROËN AUTOMOBILES S.A., 78140 Vélizy Villacoublay (FR)
(72) Inventeur: Covet, Olivier, 25000 Besancon (FR)
(74) Mandataire: Allain, Laurent

(56) Documents cités:
- DE-A1- 2 634 778
- FR-A- 2 897 587

## Description

Le domaine technique de l'invention concerne un procédé de contrôle et de réglage du montage d'une vitre de porte, pour permettre son insertion dans le joint de pavillon, ce procédé étant particulièrement au montage des véhicules de type coupé/cabriolet. L'insertion d'une vitre de porte dans un véhicule automobile, correspond à la hauteur de vitre, qui est prise dans le joint du pavillon, et qu'il faut garantir. Cette opération est routinière et sans risque, pour les véhicules automobiles possédant un toit inamovible et supporté par des montants de baies fixes, car la vitre est alors guidée avec précision par ces montants, pour que son bord supérieur pénètre idéalement dans ledit joint de pavillon. Pour les véhicules de type coupé/cabriolet, le montant de baie central a disparu, fragilisant ainsi le déplacement des vitres mobiles, dont une partie n'est alors plus bordée par un organe de guidage. La fabrication de ces véhicules munis de toits escamotables, nécessite une grande rigueur de montage, assortie d'une grande précision, car l'insertion des vitres mobiles dans le joint de pavillon, lorsque celui-ci se retrouve en position déployée et recouvre l'habitacle, est subordonnée, entre autre, au bon positionnement de la vitre dans la porte, et à la qualité de montage de la porte sur lesdits véhicules. L'invention propose un procédé de contrôle et de réglage du montage d'une vitre mobile, sur une porte d'un véhicule de type coupé/cabriolet.

Pour bien comprendre l'invention, et afin de mieux positionner les différentes pièces dans l'espace, aussi bien dans la description que dans les revendications, il est pratique de recourir à un référentiel (X,Y,Z), où X matérialise une direction parallèle à l'axe longitudinal du véhicule, Y une direction transversale et Z une direction verticale. L'axe longitudinal du véhicule est parallèle à la direction d'avancée ou de recul du véhicule, lorsque les roues sont alignées sur les cotés de caisse.

Les procédés de réglage du montage d'une vitre de porte pour des véhicules de type coupé/ cabriolet, existent et ont déjà fait l'objet de brevet. On peut, par exemple, citer le brevet FR2897587, qui se rapporte à un dispositif de réglage et de guidage d'une vitre pour une porte sans cadre. De façon conventionnelle, la vitre est guidée par l'intermédiaire d'un rail situé dans la doublure de porte. La position de ces rails en Y, peut être modifiée par pivotement d'une pièce autour d'un axe longitudinal, et sensiblement horizontal. De cette manière, la vitre peut être réglée transversalement pour s'insérer facilement dans le joint de pavillon. Le brevet US4089134, quant à lui, concerne un mécanisme de guidage d'une vitre de porte, permettant de régler le rayon de courbure de la vitre, afin de faciliter son insertion dans le joint de pavillon.

Les procédés de réglage d'une vitre de porte selon l'invention, destinés à optimiser son insertion dans le joint de pavillon, sont assortis d'une composante de contrôle, permettant de vérifier la qualité et la précision du montage, d'une part, de la vitre sur la porte, et, d'autre part, de la porte, munie de ladite vitre, sur la structure du véhicule. De cette manière, ces procédés de réglage et de contrôle peuvent être stoppés suffisamment tôt, pour éviter qu'ils n'arrivent à leur terme avec des défauts de montage irréversibles, et peuvent également autoriser des corrections de régalage, en temps réel et à toutes les étapes du processus, afin d'obtenir des montages de vitres de bonne qualité. Ces procédés trouvent leur utilité lors de la fabrication de véhicules de type coupé/cabriolet.

La présente invention a pour objet un procédé de contrôle et de réglage du montage d'une vitre mobile de porte pour un véhicule de type coupé/cabriolet, permettant son insertion dans le joint de pavillon, lorsque ledit pavillon se retrouve en position déployée et recouvre l'habitacle. La principale caractéristique d'un procédé selon l'invention est qu'il comprend les étapes successives suivantes :
- Positionnement de la vitre en X et Z sur la porte, au moyen d'un gabarit mettant en oeuvre des appuis utilisés pour la mise en référence de la vitre,
- Retrait des appuis pour contrôler la position de la vitre à l'état libre,
- Montage de la porte munie de la vitre sur le véhicule,
- Contrôle en Z de ladite porte, par alignement de ladite porte sur l'aile arrière dudit véhicule,
- Contrôle et réglage en Y de la vitre par rapport au pavillon,
- Contrôle et réglage de l'insertion de la vitre dans le joint de pavillon, au moyen de jauges fixes et mobiles.
De cette manière, le procédé de réglage et de contrôle selon l'invention comprend au moins quatre étapes de contrôle, destinées à améliorer, de façon significative, les conditions de montage de la vitre, afin qu'elle se retrouve alignée idéalement sur le joint de pavillon. Sur les véhicules de type coupé/cabriolet, les causes de mauvais réglage de la vitre aboutissant à une insertion contrariée dans le joint de pavillon, sont nombreuses, et peuvent avoir diverses origines: la tolérance de la découpe de vitre sur sa ligne supérieure, la position du pavillon, la position du montant de baie, qui évolue entre le stade de ferrage et la mise sur roues du véhicule, etc..... Il parait donc indispensable, d'opérer un certain nombre de contrôles au niveau de l'agencement des différentes pièces impliquées, de leur interaction, et de leur positionnement dans l'espace afin d'assurer une bonne fiabilité de montage.

Avantageusement, le gabarit permet de positionner la vitre en Z à l'aide d'un premier appui avant, en référence par rapport à une vitre fixe située à l'avant de la vitre mobile, et d'un deuxième appui arrière, en référence par rapport à la serrure de la porte, la vitre étant positionnée sur les butées mécaniques hautes des rails du lève-vitre, par l'intermédiaire du curseur dudit lève-vitre. Autrement dit, la vitre est placée dans la porte, puis est ensuite levée jusqu'à venir en butée contre lesdits appuis du gabarit.

Préférentiellement, le gabarit permet de positionner la vitre en X à l'aide d'un troisième appui situé à l'arrière de ladite vitre. Avantageusement, ce troisième appui est au contact du bord arrière, sensiblement vertical, de ladite vitre.

De façon avantageuse, les appuis sont mis en évidence au moyen de touches de contrôle. Ces touches de contrôle permettent de valider les différents contacts recherchés, au moyen d'un signal spécifique, pouvant être lumineux ou sonore.

De façon préférentielle, la porte comporte un bord supérieur sensiblement horizontal, le contrôle en Z de ladite porte s'effectuant visuellement au niveau de l'alignement dudit bord avec un bord supérieur de l'aile.

Avantageusement, le réglage de la vitre en Y par rapport au pavillon, s'effectue manuellement, au moyen d'un outil dans la doublure de porte.

De façon avantageuse, le contrôle de l'insertion de la vitre dans le joint de pavillon, est réalisé au moyen d'un système de jauges fixes et mobiles.

De façon préférentielle, les positions des jauges fixes correspondent à celles des deux appuis contre le gabarit permettant de positionner la vitre en Z, et sont donc situées aux extrémités de ladite vitre.

Préférentiellement, chacune des jauges est fixée à une pièce support commune, dont la courbure suit celle du pavillon. Il s'agit d'une courbure s'inscrivant dans un plan sensiblement vertical et longitudinal.

Avantageusement, chaque jauge comprend deux pattes recourbées entre lesquelles s'insère la vitre, et un capteur de contact situé entre lesdites pattes, chaque jauge étant positionnée contre la vitre, de sorte que les pattes enserrant ladite vitre se retrouvent dans le joint de pavillon, et de sorte que le capteur vient en appui contre ledit joint.

De façon préférentielle, un automate est relié aux moyens de réglage de la vitre, et, suite à un contrôle mettant en évidence une mauvaise insertion de la vitre dans le joint de pavillon, ledit automate indique, à l'opérateur, une visseuse appropriée, le nombre de tours à effectuer, ainsi que leur sens de rotation, pour corriger la position de ladite vitre..

Les procédés de réglage selon l'invention, présentent l'avantage, d'être fiables et performants, grâce à la mise en place d'opérations de contrôle, à chacune des étapes du montage de la vitre, permettant de rectifier les dérives de positionnement en temps réel, et ainsi garantir, pour chaque véhicule, une grande sûreté de montage importante.

On donne ci-après une description détaillée d'un mode de réalisation préféré d'un procédé de réglage et de contrôle selon l'invention, en se référant aux figures 1 à 10.
- La figure 1 est une vue de face d'une vitre mobile d'un véhicule coupé/cabriolet, indiquant l'emplacement des deux appuis sur les butées d'un gabarit, lors de l'opération de montage de la vitre sur la porte.
- La figure 2 est une vue de la face externe d'une porte de véhicule coupé/cabriolet, sur laquelle est monté un gabarit prévu pour le positionnement de la vitre sur ladite porte.
- La figure 3 est une vue partielle du gabarit et de la vitre, correspondant à la zone d'appui arrière.
- La figure 4 est une vue partielle du gabarit et de la vitre, correspondant à la zone d'appui avant.
- La figure 5 est une vue de la partie supérieure d'un rail de lève-vitre, illustrant la position haute du curseur.
- La figure 6 correspond à la vue de la figure 5, ayant subi une rotation à 180° autour d'un axe vertical.
- La figure 7 est une vue suivant un axe longitudinal, d'un coté de véhicule de type coupé/cabriolet, localisant l'endroit où s'effectue l'appréciation du positionnement en Z de la porte sur ledit véhicule.
- La figure 8 est une vue partielle de la partie médiane d'un véhicule coupé/cabriolet, montrant la porte munie de sa vitre mobile, ainsi qu'un système de jauges de contrôle de la position de ladite vitre par rapport au joint de pavillon.
- La figure 9 est vue en perspective de la face avant d'une jauge de contrôle.
- La figure 10 est vue en perspective de la face arrière d'une jauge de contrôle.
- La figure 11 est vue partielle transversale d'une jauge, illustrant l'insertion de ladite jauge enserrant la vitre mobile, dans le joint de pavillon.

L'invention se rapporte à un procédé de contrôle et de réglage du montage d'une vitre mobile de porte pour un véhicule de type coupé/cabriolet, permettant son insertion dans le joint de pavillon, lorsque ledit pavillon se retrouve en position déployée et recouvre l'habitacle, caractérisé en ce qu'il comprend les étapes successives suivante :
- Positionnement de la vitre en X et Z sur la porte, au moyen d'un gabarit mettant en oeuvre des appuis utilisés pour la mise en référence de la vitre,
- Retrait des appuis pour contrôler la position de la vitre à l'état libre,
- Montage de la porte munie de la vitre sur le véhicule,
- Contrôle en Z de ladite porte, par alignement de ladite porte sur l'aile arrière dudit véhicule,
- Contrôle et réglage en Y de la vitre par rapport au pavillon,
- Contrôle et réglage de l'insertion de la vitre dans le joint de pavillon, au moyen de jauges fixes et mobiles,

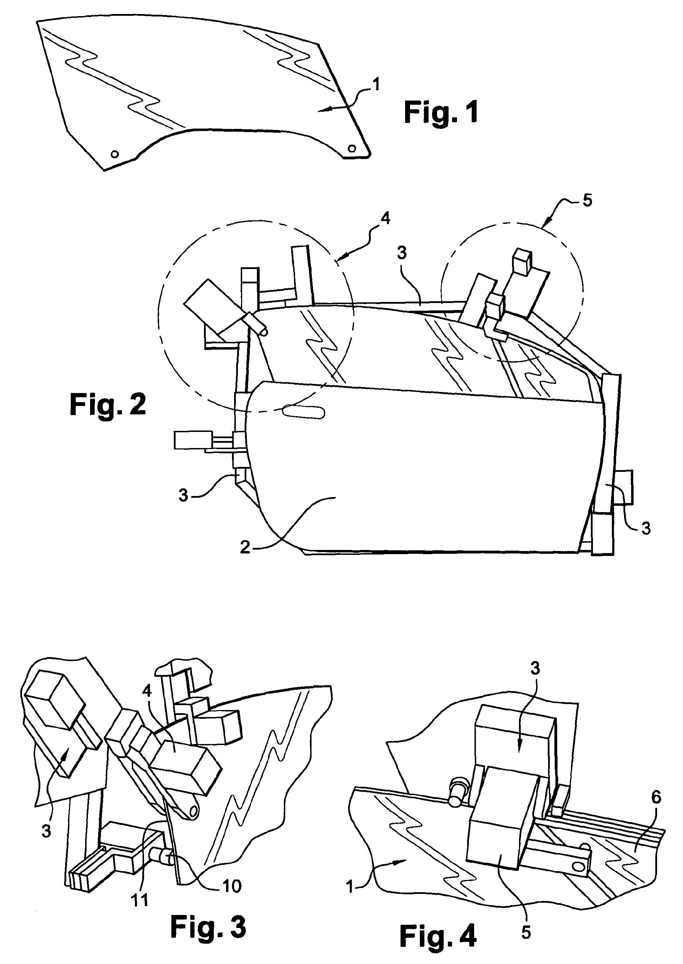

En se référant aux figures 1 et 2, le positionnement de la vitre 1 en X et en Z sur la porte 2 d'un véhicule de type coupé/cabriolet, s'effectue au moyen d'un gabarit 3 fixé sur ladite porte 2, ledit gabarit 3 ayant notamment pour fonction de positionner les vitres de façon répétitive, et toujours à la même place. Ce gabarit 3 présente, à sa partie supérieure, une fois qu'il est fixé à la porte 2, deux butées 4,5 d'appui, l'une 4 placée en partie arrière du gabarit 3, en référence par rapport à la serrure de la porte 2, l'autre 5 placée en partie avant de gabarit 3, en référence par rapport à la vitre fixe 6 située à l'avant de la vitre mobile 1. Ces butées 4,5 sont destinées à bloquer la progression verticale de la vitre 1 vers le haut.

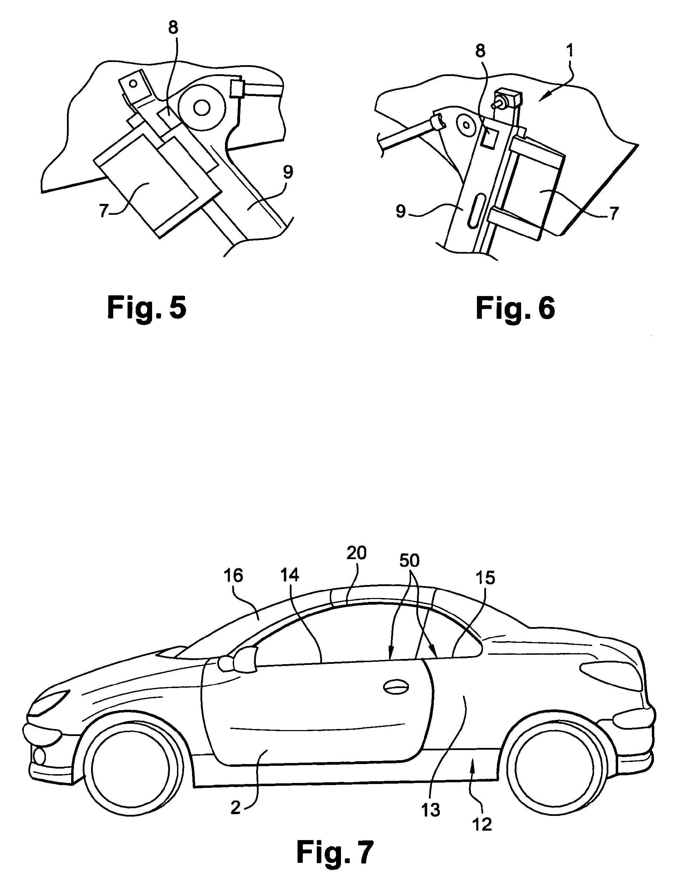

En se référant aux figures 4 et 5, ces butées 4,5 présentent généralement deux bras, au milieu desquels vient se placer la vitre mobile1, ladite vitre 1 parvenant au contact du fond desdites butées 4,5, au niveau de la zone reliant les deux bras. Ces butées 4, 5 sont assimilables à des pinces de préhension pour la vitre 1, sans exercer la moindre pression sur celle-ci.

En se référant aux figures 5 et 6, la vitre mobile 1 doit être positionnée, au moyen d'un curseur 7 de lève-vitre, sur les butées hautes 8 des rails 9 de ce lève-vitre, afin de limiter les dispersions de ce procédé de positionnement en Z de la vitre 1 sur la porte 2. Le positionnement du gabarit 3 sur la porte 2 et la conformation de ses butées 4,5, permettent un positionnement immuable de la vitre mobile 1 sur ladite porte 2.

En se référant à la figure 3, le positionnement de la vitre en X, est réalisé au moyen d'une touche 10 de contrôle, solidaire du gabarit 3, et contre laquelle le bord arrière 11 de la vitre 1, sensiblement vertical, vient au contact. Une fois effectué le positionnement en X et en Z de la vitre 1 sur la porte 2, les moyens d'appui 4,5 du gabarit 3 sont retirés, pour permettre un contrôle de positionnement de la vitre 1 à l'état libre, sur la porte 2. Si la vitre 1 est correctement positionnée, elle est alors fixée à la position idoine sur la porte 2, sinon une retouche immédiate peut être mise en oeuvre afin de repositionner ladite vitre 1 dans la porte 2. Une autre possibilité de traitement, qui est offerte en cas de mauvais positionnement de la vitre 1 sur la porte 2, est l'envoi de la vitre 1 mal réglée, en la signalant non-conforme, par l'intermédiaire du système informatique des gestions de non-conformité de l'usine.

En se référant à la figure 7, la porte 2 munie de la vitre 1 mobile bien positionnée, est montée sur la caisse 12 du véhicule. Le contrôle d'alignement en Z de la porte 2, est effectué visuellement au niveau de la zone de jonction entre ladite porte 2 et l'aile arrière 13, ladite zone étant indiquée au moyen de la flèche 50 à deux têtes. En effet, la porte 2 comporte un bord supérieur 14 sensiblement horizontal, et l'aile est délimitée dans sa partie haute, également par un bord supérieur 15. Lorsque la porte 2 est montée de façon satisfaisante sur la caisse 12, le bord supérieur 14 de la porte 12 doit se retrouver en parfaite continuité du bord supérieur 15 de l'aile 13. Cet alignement revêt une importance particulière, car il constitue un paramètre déterminant, qui va conditionner l'insertion de la vitre 1 mobile dans le joint 20 du pavillon 16. Si cet alignement est jugé non-conforme, une retouche au niveau de la porte 2 est effectuée. Ce réglage du positionnement en Z de la porte 2 sur la caisse 12, est suivi d'une phase de contrôle de la position en Y de la vitre 1, par rapport au pavillon 16. Si cette vitre 1 n'est pas correctement positionnée en Y par rapport au pavillon 16, un déplacement du rail 9 du lève vitre est effectué manuellement à l'aide d'un outil dans la doublure de porte 2, pour repositionner correctement la vitre 1 mobile. Le positionnement en Y de la vitre 1 par rapport au pavillon 16, apparaît comme essentiel vis-à-vis de l'insertion de ladite vitre 1, dans le joint 20 dudit pavillon 16. Une fois la vitre 1 positionnée de façon satisfaisante en Y, intervient alors la phase ultime du procédé selon l'invention, qui est celle du contrôle et du réglage de l'opération d'insertion de la vitre 1 dans le joint du pavillon 16.

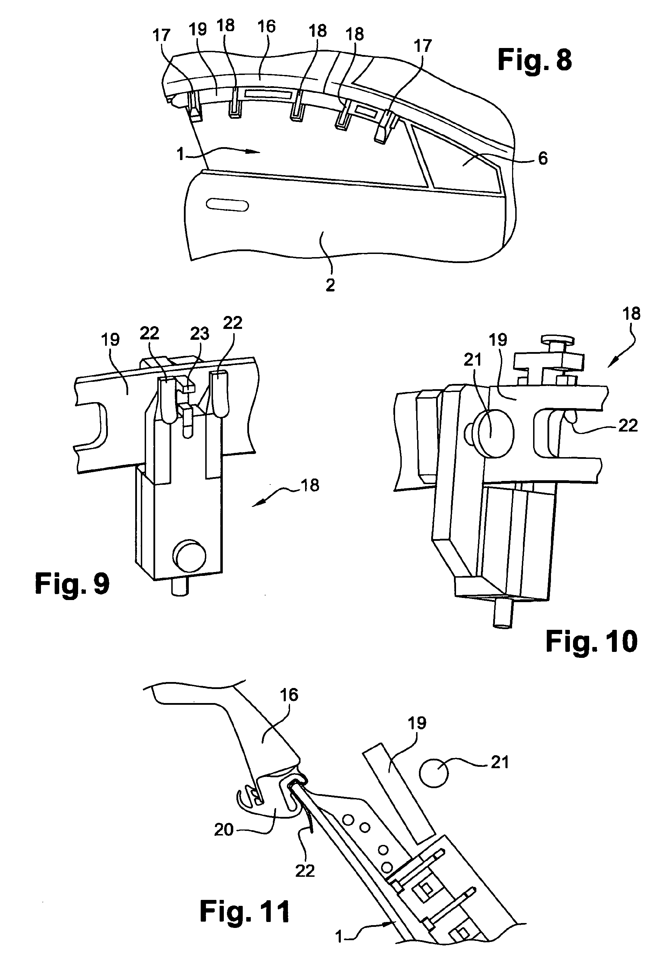

En se référant à la figure 8, cette ultime phase consacrée aux conditions d'insertion de la vitre mobile 1 dans le joint 20 du pavillon 16, est réalisée au moyen d'une pluralité de jauges 17,18 distribuées le long de la vitre 1, l'objectif étant de contrôler cette insertion tout le long du joint 20 de pavillon 16. Une pièce support 19 allongée, présentant une courbure est installée à la partie supérieure de la vitre 1, tout en étant au contact du pavillon 16. En effet, le contrôle de l'insertion de ladite vitre 1 dans le joint 20 de pavillon 16 s'effectue la vitre 1 fermée. La courbure de cette pièce support 19 suit celle du pavillon 16, donc celle du bord supérieur de la vitre 1. Cette pièce 19 porte cinq jauges, deux 17 étant en position fixe et situées aux extrémités de ladite pièce support 19, les trois autres 18 jauges pouvant être mobiles en Z et en Y, et étant situées dans l'intervalle délimité par les deux jauges fixes 17. Les deux jauges fixes 17 occupent les emplacements correspondant aux deux appuis 4,5 de positionnement de la vitre 1 avec le gabarit 3. Cette mobilité en Y et en Z des jauges centrales 18, permettent de s'affranchir de l'orientation de la pièce support 19, imposée par les deux jauges fixes 17, et permettent de prendre en compte le défaut de forme de la vitre 1 entre lesdites jauges fixes 17.

En se référant aux figures 9 et 10, une jauge 17,18 de contrôle est une pièce allongée possédant des moyens de solidarisation à la pièce support 19, sous la forme d'une vis de serrage 21, et comportant chacune, deux pattes 22 de faible épaisseur, parallèles entre elles, et recourbées à 180°.

En se référant à la figure 11, les deux segments parallèles de chaque patte 22, sont écartés, et ménagent entre eux un espace dans lequel vient s'insérer le bord supérieur de la vitre 1. Autrement dit, chaque jauge 17,18 est accrochée au bord supérieur de la vitre 1, par l'intermédiaire de ses deux pattes 22 recourbées. Entre les deux pattes 22 d'une même jauge 17,18 , est positionné un capteur 23 de contact destiné à venir au contact du joint 20 de pavillon 16. En fait, chaque jauge 17,18 est positionnée contre la vitre 1, de sorte que les pattes 22, enserrant la vitre 1, se retrouvent au fond du joint 20 de pavillon 16, et de sorte que le capteur 23 vienne au contact du joint 20 de pavillon 16.

Les informations recueillies par ces jauges 17,18 sont transmises à un automate, qui va indiquer, en cas de mauvais positionnement de la vitre 1, la visseuse à utiliser, le nombre de tours à effectuer et le sens de rotation de ces tours, pour repositionner au mieux, ladite vitre 1, afin qu'elle s'insère parfaitement dans le joint 20 de pavillon 16.

## Revendications

1. Procédé de contrôle et de réglage du montage d'une vitre mobile (1) de porte (2) pour un véhicule de type coupé/cabriolet, permettant son insertion dans le joint (20) de pavillon (16), lorsque ledit pavillon (16) se retrouve en position déployée et recouvre l'habitacle, **caractérisé en ce qu'**il comprend les étapes successives suivante :
- Positionnement de la vitre (1) en X et Z sur la porte (2), au moyen d'un gabarit (3) mettant en oeuvre des appuis (4,5) utilisés pour la mise en référence de la vitre (1),
- Retrait des appuis (4,5) pour contrôler la position de la vitre (1) à l'état libre,
- Montage de la porte (2) munie de la vitre (1) sur le véhicule,
- Contrôle en Z de ladite porte (2), par alignement de ladite porte (2) sur l'aile arrière (13) dudit véhicule,
- Contrôle et réglage en Y de la vitre (1) par rapport au pavillon (16),
- Contrôle et réglage de l'insertion de la vitre (1) dans le joint (20) de pavillon (16), au moyen de jauges (17,18) fixes et mobiles.

2. Procédé selon la revendication 1, **caractérisé en ce que** le gabarit (3) permet de positionner la vitre en Z à l'aide d'un premier appui (5) avant, en référence par rapport à une vitre fixe (6) située à l'avant de la vitre mobile (1), et d'un deuxième appui (4) arrière, en référence par rapport à la serrure de la porte (2), la vitre (1) étant positionnée sur les butées mécaniques (8) hautes des rails (9) du lève-vitre, par l'intermédiaire du curseur (7) dudit lève-vitre.

3. Procédé selon l'une quelconque des revendications 1 ou 2, **caractérisé en ce que** le gabarit (3) permet de positionner la vitre en X à l'aide d'un troisième appui situé à l'arrière de ladite vitre (1).

4. Procédé selon l'une quelconque des revendications 2 ou 3, **caractérisé en ce que** les appuis (4,5,10) sont mis en évidence au moyen de touches de contrôle.

5. Procédé selon l'une quelconque des revendications précédentes, **caractérisé en ce que** la porte (2) comporte un bord supérieur (14) sensiblement horizontal, le contrôle en Z de ladite porte (2) s'effectuant visuellement au niveau de l'alignement dudit bord (14) avec un bord supérieur (15) de l'aile (13).

6. Procédé selon l'une quelconque des revendications précédentes, **caractérisé en ce que** le réglage de la vitre (1) en Y par rapport au pavillon (16), s'effectue manuellement, au moyen d'un outil dans la doublure de porte (2).

7. Procédé selon l'une quelconque des revendications précédentes, **caractérisé en ce que** le contrôle de l'insertion de la vitre (1) dans le joint (20) de pavillon (16), est réalisé au moyen d'un système de jauges fixes (17) et mobiles (18).

8. Procédé selon la revendication 7, **caractérisé en ce que** les positions des jauges fixes (17) correspondent à celles des deux appuis (4,5) contre le gabarit (3) permettant de positionner la vitre en Z, et sont donc situées aux extrémités de la vitre (1).

9. Procédé selon l'une quelconque des revendications 7 ou 8, **caractérisé en ce que** chacune des jauges (17,18) est fixée à une pièce support (19) commune, dont la courbure est identique à celle du pavillon (16).

10. Procédé selon la revendication 9, **caractérisé en ce que** chaque jauge (17,18) comprend deux pattes (22) recourbées, entre lesquelles s'insère la vitre (1), et un capteur (23) de contact situé entre lesdites pattes (22), chaque jauge (17,18) étant positionnée contre la vitre (1), de sorte que les pattes (22) enserrant ladite vitre (1), se retrouvent dans le joint (20) de pavillon (16), et de sorte que le capteur (23) vient en appui contre ledit joint (20).

11. Procédé selon l'une quelconque des revendications 7 à 10, **caractérisé en ce que**, un automate est relié aux moyens de réglage de la vitre (1), et **en ce que**, suite à un contrôle mettant en évidence une mauvaise insertion de la vitre (1) dans le joint (20) de pavillon (16), ledit automate indique à l'opérateur, une visseuse appropriée, le nombre de tours à effectuer, ainsi que leur sens de rotation.

## Claims

1. Method for controlling and adjusting the installation of a movable window pane (1) of a door (2) for a vehicle of the coupe/cabriolet type, permitting its insertion in the joint (20) of the roof (16), when the said roof (16) is in deployed position and covers the passenger compartment, **characterized in that** it comprises the following successive stages:
- Positioning of the window pane (1) in X and Z on the door (2), by means of a template (3) utilizing supports (4, 5) which are used for referencing the window pane (1),
- Withdrawal of the supports (4, 5) to control the position of the window pane (1) in the free state,
- Mounting of the door (2) provided with the window pane (1) on the vehicle,
- Controlling in Z of the said door (2), by alignment of the said door (2) on the rear quarter panel (13) of the said vehicle,
- Controlling and adjusting in Y of the window pane (1) with respect to the roof (16),
- Controlling and adjusting of the insertion of the window pane (1) in the joint (20) of the roof (16), by means of fixed and movable gauges (17, 18).

2. Method according to Claim 1, **characterized in that** the template (3) allows the window pane to be positioned in Z by means of a first front support (5), in reference with respect to a fixed window pane (6) situated in front of the movable window pane (1), and by means of a second rear support (4), in reference with respect to the lock of the door (2), the window pane (1) being positioned on the upper mechanical stops (8) of the rails (9) of the window winder, by means of the cursor (7) of the said window winder.

3. Method according to any one of Claims 1 or 2, **characterized in that** the template (3) allows the window pane to be positioned in X by means of a third support situated behind the said window pane (1).

4. Method according to any one of Claims 2 or 3, **characterized in that** the supports (4, 5, 10) are highlighted by means of control keys.

5. Method according to any one of the preceding claims, **characterized in that** the door (2) comprises an upper, substantially horizontal edge (14), with the controlling in Z of the said door (2) being carried out visually at the level of the alignment of the said edge (14) with an upper edge (15) of the quarter panel (13).

6. Method according to any one of the preceding claims, **characterized in that** the adjusting of the window pane (1) in Y with respect to the roof (16), is carried out manually, by means of a tool in the lining of the door (2).

7. Method according to any one of the preceding claims, **characterized in that** the controlling of the insertion of the window pane (1) in the joint (20) of the roof (16), is realized by means of a system of fixed gauges (17) and movable gauges (18).

8. Method according to Claim 7, **characterized in that** the positions of the fixed gauges (17) correspond to those of the two supports (4, 5) against the template (3), allowing the window pane to be positioned in Z, and are therefore situated at the ends of the window pane (1).

9. Method according to any one of claims 7 or 8, **characterized in that** each of the gauges (17, 18) is fixed to a shared support piece (19), the curvature of which is identical to that of the roof (16).

10. Method according to Claim 9, **characterized in that** each gauge (17, 18) comprises two bent lugs (22), between which the window pane (1) is inserted, and a contact sensor (23) situated between the said lugs (22), each gauge (17, 18) being positioned against the window pane (1), so that the lugs (22) surrounding the said window pane (1), are situated in the joint (20) of the window pane (16), and so that the sensor (23) comes to rest against the said joint (20).

11. Method according to any one of Claims 7 to 10, **characterized in that** an automaton is connected to the means for adjusting the window pane (1), and **in that**, following a control highlighting a poor insertion of the window pane (1) in the joint (20) of the roof (16), the said automaton indicates to the operator, a suitable screwdriver, the number of turns to be carried out and also their direction of rotation.

## Patentansprüche

1. Verfahren zum Steuern und Einstellen der Montage einer beweglichen Fensterscheibe (1) einer Tür (2) für ein Fahrzeug des Typs Coupe/Kabriolett, das ihr Einfügen in die Dichtung (20) des Himmels (16) erlaubt, wenn sich der Himmel (16) in aufgefalteter Position befindet und die Fahrgastzelle abdeckt, **dadurch gekennzeichnet, dass** es die folgenden aufeinander folgenden Schritte aufweist:
- Positionieren der Fensterscheibe (1) in X und Z auf der Tür (2) mittels einer Schablone (3), die Auflagen (4, 5) umsetzt, die zum Einstellen der Fensterscheibe (1) verwendet werden,
- Entfernen der Auflagen (4, 5) zum Prüfen der Position der Fensterscheibe (1) im freien Zustand,
- Montage der Tür (2), die mit der Fensterscheibe (1) versehen ist, auf das Fahrzeug,
- Kontrolle in Z der Tür (2) durch Ausrichten der Tür (2) zum hinteren Kotflügel (13) des Fahrzeugs,
- Kontrolle und Einstellung in Y der Fensterscheibe (1) in Bezug zu dem Himmel (16),
- Kontrolle und Einstellung des Einfügens der Fensterscheibe (1) in die Dichtung (20) des Himmels (16) mittels stationären und beweglichen Eichmaßen (17, 18).

2. Verfahren nach Anspruch 1, **dadurch gekennzeichnet, dass** die Schablone (3) das Positionieren der Fensterscheibe in Z mit Hilfe einer ersten vorderen Auflage (5) in Einstellung in Bezug zu einer stationären Fensterscheibe (6), die sich an der Vorderseite der beweglichen Fensterscheibe (1) befindet, und einer zweiten hinteren Auflage (4), in Einstellung in Bezug zu dem Schloss der Tür (2) erlaubt, wobei die Scheibe (1) auf den oberen mechanischen Anschlägen (8) der Schienen (9) des Fensterhebers über das Gleitelement (7) des Fensterhebers positioniert wird.

3. Verfahren nach einem der Ansprüche 1 oder 2, **dadurch gekennzeichnet, dass** die Schablone (3) das Positionieren der Fensterscheibe in X mit Hilfe einer dritten Auflage, die sich an der Rückseite der Fensterscheibe (1) befindet, erlaubt.

4. Verfahren nach einem der Ansprüche 2 oder 3, **dadurch gekennzeichnet, dass** die Auflagen (4, 5, 10) mittels Prüftasten aufgezeigt werden.

5. Verfahren nach einem der vorhergehenden Ansprüche, **dadurch gekennzeichnet, dass** die Tür (2) einen oberen Rand (14) aufweist, der im Wesentlichen horizontal ist, wobei die Kontrolle in Z der Tür (2) als Sichtprüfung auf dem Niveau der Fluchtung des Rands (14) mit einem oberen Rand (15) des Kotflügels (13) erfolgt.

6. Verfahren nach einem der vorhergehenden Ansprüche, **dadurch gekennzeichnet, dass** das Einstellen der Fensterscheibe (1) in Y in Bezug zu dem Himmel (16) manuell mittels eines Werkzeugs in der Verkleidung der Tür (2) erfolgt.

7. Verfahren nach einem der vorhergehenden Ansprüche, **dadurch gekennzeichnet, dass** die Kontrolle des Einfügens der Fensterscheibe (1) in die Dichtung (20) des Himmels (16) mittels eines Systems mit stationären Eichmaßen (17) und beweglichen Eichmaßen (18) ausgeführt wird.

8. Verfahren nach Anspruch 7, **dadurch gekennzeichnet, dass** die Positionen der stationären Eichmaße (17) denen der zwei Auflagen (4, 5) gegen die Schablone (3), die das Positionieren der Scheibe in Z erlauben, entsprechen und sich daher an den Enden der Fensterscheibe (1) befinden.

9. Verfahren nach einem der Ansprüche 7 oder 8, **dadurch gekennzeichnet, dass** jedes der Eichmaße (17, 18) an einem gemeinsamen Tragteil (19), dessen Krümmung mit der des Himmels (16) identisch ist, befestigt ist.

10. Verfahren nach Anspruch 9, **dadurch gekennzeichnet, dass** jedes Eichmaß (17, 18) zwei zurückgebogene Pratzen (22) aufweist, zwischen welche sich die Fensterscheibe (1) einfügt, und einen Berührungssensor (23), der sich zwischen den Pratzen (22) befindet, wobei jedes Eichmaß (17, 18) gegen die Fensterscheibe (1) derart positioniert ist, dass sich die Pratzen (22), die die Fensterscheibe (1) einklemmen, in der Dichtung (20) des Himmels (16) befinden, und derart, dass der Sensor (23) gegen die Dichtung (20) zum Aufliegen kommt.

11. Verfahren nach einem der Ansprüche 7 bis 10, **dadurch gekennzeichnet, dass** ein Automat mit den Einstellmitteln der Fensterscheibe (1) verbunden ist, und **dadurch**, dass der Automat in Folge einer Kontrolle, die ein schlechtes Einfügen der Fensterscheibe (1) in die Dichtung (20) des Himmels (16) aufzeigt, dem Bediener ein geeignetes Schraubgerät, die Anzahl der auszuführenden Umdrehungen sowie ihre Drehrichtung anzeigt.
